# EUROPEAN PATENT APPLICATION

(11) **EP 3 677 548 A1**
(43) Date of publication of application: **08.07.2020**
(21) Application number: 17833482.7
(22) Date of filing: 21.07.2017
(51) Int. Cl.: C01B 33/18, C01B 33/146, C01B 33/193

(54) **METHOD FOR MANUFACTURING ULTRA-POROUS NANO-SIO2**

(30) Priority: 25.07.2016 CN 201610589308
(71) Applicant: Wang, Chengyuan, Beijing 100000 (CN)
(72) Inventor: Wang, Chengyuan, Beijing 100000 (CN)
(74) Representative: Cabinet Chaillot
(86) International application number: PCT/CN2017/093772
(87) International publication number: WO 2018/019179

(57) **Abstract**

Provided is a method for manufacturing ultra-porous nano-SiO₂, comprising: a) adding 10,000 liters of a 15-20% inorganic acid solution in 15,000 liters of a silica sol comprising 40-45% silicon dioxide, then mixing till the silica sol is uniformly distributed within the inorganic acid solution to obtain a sol solution; b) adding the solution sol into a micro-channel reactor, and passing a 30-50% sodium silicate solution and a 20-40% inorganic acid solution through the micro-channel reactor, then adjusting the micro-channel reactor and heating to a temperature of 80-120°C to perform a micro-channel reaction; c) when the micro-channel reaction is complete, then uniformly dispensing a material and using a spin-spraying method to deliver the material to a high-temperature spray drying tower for disintegration and drying where a micro-channel reaction product is atomized and undergoes high temperature contact disintegration and drying to instantaneously form an ultra-porous particle; and d) performing cyclonic classification of the ultra-porous particle, collecting a dust, and obtaining the ultra-porous nano-SiO₂.The method has low production costs and simple techniques. The ultra-porous nano-SiO₂ has the advantages of excellent activity, adsorption, and dispersiveness, large specific surface area, and large number of internal pores.

## Description

### FIELD OF THE INVENTION

The invention relates to the field of nano materials manufacturing, and in particular, to a method for manufacturing ultra-porous nano-SiO₂.

### DESCRIPTION OF THE RELATED ART

The famous scientist Qian Xuesen once predicted: "Nanotechnology is the focus of development in the 21st century, it will be a technological revolution, and it is also an industrial revolution." Since the beginning of the last century, the forward-looking, strategic, and basic science of nanomaterials has attracted extensive concern and attention from many scholars, experts, scientists, entrepreneurs, and senior leaders from all over the world. In the 1980s, China included nanoscience into the National 863 Program and the National Natural Science Fund Project, and invested hundreds of millions of yuan in project research; however, there is a wide gap between China and Europe and the United States on nanotechnology. Various data show that people are amazed at the magic of nano materials. Scientists and technicians from all over the world are also actively involved in research; and in particular, the research on ultra-pure and ultra-fine nano-crystallization of SiO₂ materials is a hot issue.

The conventional techniques used so far in the world are mainly precipitation method and gas phase method. Precipitation method is a common method for manufacturing the product at home and abroad, but this method occupies a large area and a long construction period. Specifically, the quartz sand and alkali are melted at high temperature to be synthesized into the solid sodium silicate, and the solubility of the metal salt or alkali is used to adjust the acidity, temperature and solvent of the solution to cause precipitation, and then the precipitate is washed, dried and heat treated to form the ultra-fine powder. The product obtained by the method has low purity, small specific surface area, wide distribution range and large particle diameter, and the original particle diameter of the product is 33-47 µm; after the mechanical pulverization, the product has a particle diameter of 10-15 µm, the porosity is low, and the specific surface area thereof is 190 m²/g, which cannot meet the requirements as a filler for rubber products. Another conventional method is the gas phase method; specifically, the silicon tetrachloride is used as the raw material, and the product is obtained by the technique such as thermal cracking decomposition, aggregation, deacidification, and the like. Although the particles of the product produced by the gas phase method are very fine, but the yield is very low, the raw materials are expensive, the requirements of equipment are high, the production period is long, the energy consumption is huge, and a large amount of toxic gas is generated in the reaction process, the environment is seriously polluted, which is not suitable for industrial production. There are many other methods for manufacturing nano-SiO₂ powders, including mechanical pulverization method, sol-gel method, super-gravity method, micro-emulsion method, etc., but these methods have certain defects.

The prior patent CN1048956C discloses a method for preparing secondary crystallization superfine white carbon black. The invention employs secondary crystallization method, wherein a crystalline aggregate refers to an inorganic acid as a catalyst and silica sol formed crystals, so-called secondary crystalline silica sol refers to a sponge-like crystals dispersed in the primary crystal formed as seeds, sodium silicate, a mineral acid and water atomization controlled temperature, neutralization, hydrolysis of acceleration, velocity and PH stirring, thereby forming a secondary crystalline silica, and then washed rapidly cooled, dried to obtain ultra-fine silica products. However, the method of the invention has high equipment cost, occupies a large area, and the reaction speed is slow, which consumes a large amount of water resources and gas fuel energy; the gas combustion generates a large amount of carbon dioxide, which causes a greenhouse effect, and the content of nano-scale material in the product is only 50%.

### SUMMARY OF THE INVENTION

The invention solves the deficiencies in all of the technical issues above, reduces the production cost, saves resources and energy, protects the environment, and improves the quality of the product; the invention provides a method for manufacturing ultra-porous nano-SiO₂ with simpler technique, lower production cost, excellent activity, adsorption, and dispersiveness, large specific surface area, large number of internal pores and wider application range.

To achieve the objective of the invention, the invention provides a method for manufacturing ultra-porous nano-SiO₂, comprising:
a) adding 10,000 liters of a 15-20% inorganic acid solution in 15,000 liters of a silica sol comprising 40-45% silicon dioxide, then mixing till the silica sol is uniformly distributed within the inorganic acid solution to obtain a sol solution;
b) adding the solution sol into a micro-channel reactor, and passing a 30-50% sodium silicate solution and a 20-40% inorganic acid solution through the micro-channel reactor, then adjusting the micro-channel reactor and heating to a temperature of 80-120°C to perform a micro-channel reaction;
c) when the micro-channel reaction is complete, then uniformly dispensing a material and using a spin-spraying method to deliver the material to a high-temperature spray drying tower for disintegration and drying where a micro-channel reaction product is atomized and undergoes high temperature contact disintegration and drying to instantaneously form an ultra-porous particle;
d) performing cyclonic classification of the ultra-porous particle, collecting a dust, and obtaining the ultra-porous nano-SiO₂.

Further, the inorganic acid is mixed in proportion to one or more of hydrochloric acid, sulfuric acid, nitric acid and phosphoric acid.

Further, in step a), the mixing method is mechanical mixing; the rotation speed thereof is 1000-2000 r/min, and the optimal rotation speed thereof is 1500 r/min.

Further, in step b), the input amount of the 30-50% sodium silicate solution and the 20-40% inorganic acid solution are adjusted according to the pH value; the pH value in the micro-channel reaction is controlled at 5-9, and the optimal pH value is 6.5-7; the time of the micro-channel reaction is 1-10 min, and the optimal time of reaction is 1-2 min; the optimal heating temperature of the micro-channel reactor is 100°C; an acid pump stepless speed regulation is used for the inorganic acid solution to control the flow rate, and an automatic control in the micro-channel reactor is realized.

Further, in step c), the temperature of the spray drying tower is controlled at 500-1200°C, and the optimal temperature thereof is 800°C.

Further, in step c), the spin speed is controlled at 3000-5000 r/min, and the optimal spin speed is 4000 r/min.

The invention has significant advantages compared with the prior art:
1. The row material of the invention is inexpensive, the reaction rate is fast, the production period is short, and it is easy to perform.
2. The new international micro-channel reaction equipment is adopted for the invention, the large-scale glass-lined reactor occupying large area is replaced, and large boilers burning coal and gas are discarded; the investment equipment cost is lowered by one third, which greatly reduces the production cost.
3. Water resources are saved: the method of the invention omits the washing process and no longer consumes a large amount of water resources.
4. The energy is saved: there is no need for boilers, coal and gas burning, and steam for heat exchange.
5. No waste water, waste gas and waste residue are discharged in the whole production process, which is environmentally friendly and pollution-free, and is more suitable for industrial production.
6. The product has excellent performance, which is insoluble in water and acid, stable in chemical properties, high in temperature resistance, and good in electrical insulation performance, excellent in activity, adsorption, and dispersiveness, fine in optical and mechanical properties. The original particle diameter of the product can reach 0.1-1 µm, and the specific surface area can reach 600 m²/g; the product has many internal pores, the tensile strength can reach 320 Mpa, and the proportion of the nano-scale material in the product is not less than 85%.
7. The ultra-porous nano-SiO₂ of the invention has strong affinity with various rubbers. The silanol group on the surface of the ultra-porous nano-SiO₂ acts as a cross-linking agent in the rubber vulcanization process, resulting in a prominent reinforcing effect; for example, it can be added to tires as a tire reinforcing agent, a filler and an anti-wear agent, which can improve the service life of the tire by 6-8 times and guarantee driving safety.
8. The application range is wide: the ultra-porous nano-SiO₂ of the invention is widely used for catalyst carrier, polymer composite material, electronic packaging material, precision ceramic material, rubber, paper, plastic, paint, ink, paper, glass steel, adhesive, high-grade filler, sealant, coating, optical fiber, precision casting and many other industrial products, which has special excellent effects.

### BRIEF DESCRIPTION OF THE DRAWINGS

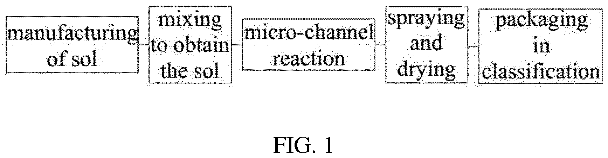

FIG. 1 is a block diagram illustrating the technique flow of the invention.

### DETAILED DESCRIPTION OF THE PREFERRED EMBODIMENTS

The invention is further described in detail with the drawings hereinafter.

Embodiment 1: with reference to FIG. 1, a method for manufacturing ultra-porous nano-SiO₂, comprising:
a) adding 10,000 liters of a 20% inorganic acid solution in 15,000 liters of a silica sol comprising 40% silicon dioxide, then mixing till the silica sol is uniformly distributed within the inorganic acid solution to obtain a sol solution;
b) adding the solution sol into a micro-channel reactor, and passing a 40% sodium silicate solution and a 28% inorganic acid solution through the micro-channel reactor, then adjusting the micro-channel reactor and heating to a temperature of 100°C to perform a micro-channel reaction;
c) when the micro-channel reaction is complete, then uniformly dispensing a material and using a spin-spraying method to deliver the material to a high-temperature spray drying tower for disintegration and drying where a micro-channel reaction product is atomized and undergoes high temperature contact disintegration and drying to instantaneously form an ultra-porous particle;
d) performing cyclonic classification of the ultra-porous particle, collecting a dust, and obtaining the ultra-porous nano-SiO₂.

The inorganic acid is sulfuric acid. In step a), the mixing method is mechanical mixing, and the rotation speed thereof is 1500 r/min. In step b), the input amount of the 40% sodium silicate solution and the 20% inorganic acid solution are adjusted according to the pH value; the pH value in the micro-channel reaction is controlled at 6.5-7; the time of the micro-channel reaction is 1-2 min; an acid pump stepless speed regulation is used for the inorganic acid solution to control the flow rate, and an automatic control in the micro-channel reactor is realized. In step c), the temperature of the spray drying tower is controlled at 800°C. In step c), the spin speed is controlled at 4000 r/min.

Embodiment 2: with reference to FIG. 1, a method for manufacturing ultra-porous nano-SiO₂, comprising:
a) adding 10,000 liters of a 18% inorganic acid solution in 15,000 liters of a silica sol comprising 45% silicon dioxide, then mixing till the silica sol is uniformly distributed within the inorganic acid solution to obtain a sol solution;
b) adding the solution sol into a micro-channel reactor, and passing a 45% sodium silicate solution and a 25% inorganic acid solution through the micro-channel reactor, then adjusting the micro-channel reactor and heating to a temperature of 110°C to perform a micro-channel reaction;
c) when the micro-channel reaction is complete, then uniformly dispensing a material and using a spin-spraying method to deliver the material to a high-temperature spray drying tower for disintegration and drying where a micro-channel reaction product is atomized and undergoes high temperature contact disintegration and drying to instantaneously form an ultra-porous particle;
d) performing cyclonic classification of the ultra-porous particle, collecting a dust, and obtaining the ultra-porous nano-SiO₂.

The inorganic acid is sulfuric acid. In step a), the mixing method is mechanical mixing, and the rotation speed thereof is 1500 r/min. In step b), the input amount of the 40% sodium silicate solution and the 20% inorganic acid solution are adjusted according to the pH value; the pH value in the micro-channel reaction is controlled at 6.5-7; the time of the micro-channel reaction is 1-2 min; an acid pump stepless speed regulation is used for the inorganic acid solution to control the flow rate, and an automatic control in the micro-channel reactor is realized. In step c), the temperature of the spray drying tower is controlled at 1000°C. In step c), the spin speed is controlled at 4000 r/min.

The technical indicators of the ultra-porous nano-SiO₂ manufactured by the method of the invention are as follows:

| | |
|---|---|
| appearance | ultra-porous and micro-porous in product particles |
| color | superior to the national standard |
| content of silicon dioxide | ≥98.5% |
| pH value | 6.5-7 |
| original particle diameter | 0.1-1µm |
| specific surface area | 600 m²/g |
| tensile strength | 320 Mpa |
| proportion of the nano-scale material in the product | ≥85% |
| total content of copper (mg/kg) | ≤30 |
| total content of manganese (mg/kg) | ≤50 |
| total content of iron | ≤500 ppm |

The product in the embodiment of the invention meets the technical requirements of the Class A product of the national standard GB10517-89 and the technical conditions of the chemical industry standard HG/T2197-91, all of which meet the standard and are superior to the standard.

The final result of the product of the invention far exceeds the national standard and the international standard, which is by far the best product of ultra-porous nano-SiO₂ in the world.

It is obvious that the above description is not intended to limit the invention, and the invention is not limited thereto. Variations, changes, additions or substitutions made by those skilled in the art within the essential scope of the invention shall all fall within the protection scope of the invention.

## Claims

1. A method for manufacturing ultra-porous nano-SiO₂, comprising:
a) adding 10,000 liters of a 15-20% inorganic acid solution in 15,000 liters of a silica sol comprising 40-45% silicon dioxide, then mixing till the silica sol is uniformly distributed within the inorganic acid solution to obtain a sol solution;
b) adding the solution sol into a micro-channel reactor, and passing a 30-50% sodium silicate solution and a 20-40% inorganic acid solution through the micro-channel reactor, then adjusting the micro-channel reactor and heating to a temperature of 80-120°C to perform a micro-channel reaction;
c) when the micro-channel reaction is complete, then uniformly dispensing a material and using a spin-spraying method to deliver the material to a high-temperature spray drying tower for disintegration and drying where a micro-channel reaction product is atomized and undergoes high temperature contact disintegration and drying to instantaneously form an ultra-porous particle;
d) performing cyclonic classification of the ultra-porous particle, collecting a dust, and obtaining the ultra-porous nano-SiO₂.

2. The method for manufacturing ultra-porous nano-SiO₂ according to claim 1, wherein the inorganic acid is mixed in proportion to one or more of hydrochloric acid, sulfuric acid, nitric acid and phosphoric acid.

3. The method for manufacturing ultra-porous nano-SiO₂ according to claim 1, wherein in step a), the mixing method is mechanical mixing, and the rotation speed thereof is 1000-2000 r/min.

4. The method for manufacturing ultra-porous nano-SiO₂ according to claim 1, wherein in step b), the input amount of the 30-50% sodium silicate solution and the 20-40% inorganic acid solution are adjusted according to the pH value; the pH value in the micro-channel reaction is controlled at 5-9; the time of the micro-channel reaction is 1-10 min; an acid pump stepless speed regulation is used for the inorganic acid solution to control the flow rate, and an automatic control in the micro-channel reactor is realized.

5. The method for manufacturing ultra-porous nano-SiO₂ according to claim 1, wherein in step c), the temperature of the spray drying tower is controlled at 500-1200°C.

6. The method for manufacturing ultra-porous nano-SiO₂ according to claim 1, wherein in step c), the spin speed is controlled at 3000-5000 r/min.
